# EUROPÄISCHE PATENTSCHRIFT

(11) **EP 0 372 399 B1**
(45) Veröffentlichungstag und Bekanntmachung des Hinweises auf die Patenterteilung: **08.09.1993**
(21) Anmeldenummer: 89122123.6
(22) Anmeldetag: 30.11.1989
(51) Int. Cl.: F16M 11/04, F16M 13/02

(54) **Teleskopisch längenveränderlicher Tragarm**
Telescopic supporting arm adjustable in length
Bras de support télescopique réglable en longueur

(30) Priorität: 05.12.1988 DE 3840893
(43) Veröffentlichungstag der Anmeldung: 13.06.1990
(73) Patentinhaber: Steinhilber, Helmut, CH-6052 Hergiswil (CH)
(72) Erfinder: Steinhilber, Helmut, CH-6052 Hergiswil (CH)
(74) Vertreter: Patentanwälte Westphal, Buchner, Mussgnug Neunert, Göhring

(56) Entgegenhaltungen:
- CH-A- 663 881
- DE-B- 1 270 618
- DE-U- 8 705 173
- DE-U- 8 709 871
- DE-U- 8 714 332

## Beschreibung

Die Erfindung betrifft einen teleskopisch längenveränderlichen Tragarm bzw. eine Tragschiene.

Teleskopisch längenveränderliche Tragarme bzw. Tragschienen sind in zahlreichen Ausführungen und für die verschiedensten Anwendungszwecke bekannt. Aus CH-A-663 881 ist es beispielsweise bekannt, Büro-Arbeitsgeräte wie Tastaturen usw. mittels solcher Tragarme lageveränderlich anzuordnen. Dieser bekannte, teleskopisch ausziehbare, horizontale Tragarm ist so ausgelegt, daß ein möglichst leichtgängiges Ausziehen und Einschieben erreicht wird. Wenn das durch den Tragarm getragene Gerät betätigt wird oder an einem durch den Tragarm getragenen Gegenstand irgendwelche Maßnahmen durchgeführt werden müssen, wirken Kräfte auf das Gerät bzw. den Gegenstand, die zu einer zu diesem Zeitpunkt unerwünschten Einschub- bzw. Auszugbewegung des teleskopischen Armes führen können. Um eine solche unerwünschte Längenveränderung des Tragarmes zu verhindern, ist eine Arretierschraube vorgesehen. Um den Tragarm auszuziehen oder einzuschieben, muß die Arretierschraube gelöst und nach der Längenveränderung wieder festgezogen werden. Dies macht die Handhabung des Tragarmes umständlich.

Aus DE-U-87 09 871 ist ein horizontaler Tragarm für Datenverarbeitungsgeräte bekannt, der in der Höhe verstellbar ist. Hierzu greift der Tragarm mit einem abgewinkelten Teleskopstück in ein gegen die Vertikale geneigt angeordnetes Führungsteleskopstück. Durch das auf den Tragarm wirkende Gewicht werden die beiden Teleskopstükke gegeneinander verkantet, so daß sie selbsthemmend in der jeweiligen Auszugsstellung klemmen. Durch Anheben des Tragarmes kann diese Klemmung gelöst und die Höhe teleskopisch verändert werden. Eine Längenveränderung des Tragarmes in horizontaler Richtung ist nicht vorgesehen. Die aus DE-U-87 09 871 bekannte selbsthemmende Klemmung ist auch nur für relativ kurze Teleskopstücke möglich, die durch das einwirkende Kippmoment eine starke gegenseitige Verkantung erfahren. Bei einem langen horizontal ausziehbaren Teleskoparm, wie ihn z.B. CH-A-663 881 zeigt, ergibt sich bei stärker eingeschobenem Arm nur ein minimales gegenseitiges Verkanten der Achsen der beiden ineinandergeführten Teleskopteile, so daß keine selbsthemmende Klemmung auftritt.

Der Erfindung liegt die Aufgabe zugrunde, einen teleskopisch längenveränderlichen Tragarm bzw. eine Tragschiene zu schaffen, der in jeder gewünschten Auszugslänge selbsttätig arretiert, um eine unerwünschte teleskopische Bewegung zu vermeiden, ohne daß für die Arretierung und die Lösung der Arretierung zusätzlich eine manuelle Betätigung notwendig ist.

Diese Aufgabe wird erfindungsgemäß gelöst durch den Tragarm gemäß Anspruch 1.

Vorteilhaft Ausführungsformen der Erfindung sind in den Unteransprüchen angegeben.

Um das Feststellen des horizontal ausziehbaren teleskopischen Tragarms für den Benutzer einfach zu machen, sind die teleskopisch ineinanderschiebbaren Armglieder mit einem Klemmeinsatz ausgestattet, der ein gegenseitiges Festklemmen der Armglieder in jeder beliebigen Ausziehlage erlaubt. Die Armglieder werden in dem jeweiligen Klemmeinsatz durch das bei Belastung des Tragarmes entstehende Kippmoment festgeklemmt. Das Festklemmen erfolgt daher zwangsläufig bei Belastung des Tragarmes. Um den Tragarm wieder teleskopisch zu verschieben, muß nur das freie Ende des Tragarmes leicht angehoben werden, wodurch die Klemmung der Armglieder gelöst wird. Da zum Lösen der Klemmung das Ende des Tragarmes angehoben werden muß, ist ein unbeabsichtigtes Verschieben des teleskopischen Tragarmes ausgeschlossen.

Im folgenden wird die Erfindung anhand eines in der Zeichnung dargestellten Ausführungsbeispieles näher erläutert. Es zeigen
- Figur 1: eine Seitenansicht des Tragarmes,
- Figur 2: einen Schnitt gemäß der Linie II-II in Figur 1 und
- Figur 3: einen Schnitt gemäß der Linie III-III in Figur 1.

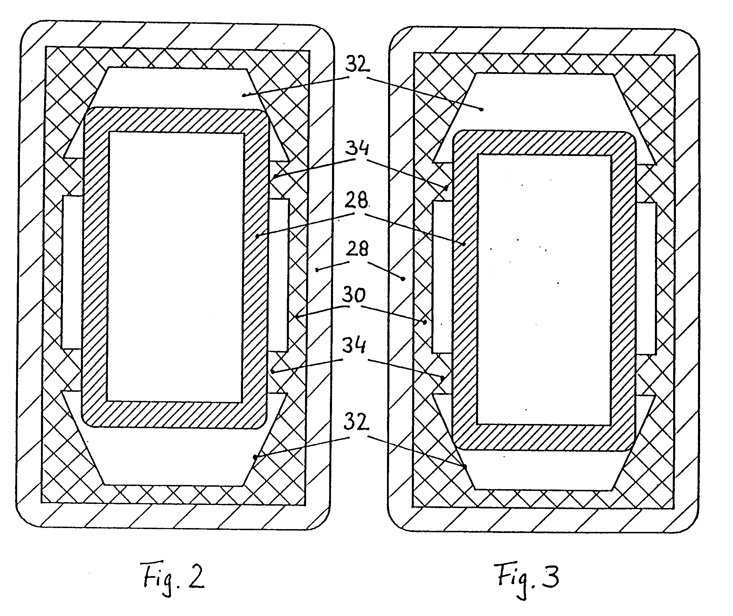

Der Tragarm 16 besteht aus drei Armgliedern, die teleskopisch ineinanderschiebbar sind. Die Armglieder 28 weisen ein Vierkant-Hohlprofil auf, wobei die Querschnitte so abgestuft sind, daß die Armglieder 28 jeweils mit Spiel ineinandergeschoben werden können. An dem jeweils freien Ende der beiden äußeren Armglieder 28 sind innen in das Hohlprofil als Klemmeinsatz zwei im Abstand voneinander angeordnete Klemmteile 30 eingesetzt. Wie die Figuren 2 und 3 zeigen, umschließen die Klemmteile 30 jeweils das in diesem Armglied 28 geführte nächste Armglied 28 mit kleinem Querschnitt. Oben und unten sind die Klemmteile 30 jeweils mit einer Klemmaufnahme 32 versehen, die sich von einer Breite, die größer ist als die Breite des umschlossenen Armgliedes 28, nach oben bzw. nach unten auf eine Breite verengt, die kleiner ist als die Breite dieses umschlossenen Armgliedes 28. An den vertikalen Seiten der Klemmteile 30 sind nach innen ragende Vorsprünge 34 ausgebildet, die gleitend an den vertikalen Seiten des umschlossenen Armgliedes 28 anliegen.

Wird der Tragarm 16 teleskopisch ausgezogen, so wirkt auf die Armglieder 28 aufgrund des Eigengewichtes ein Kippmoment. Dieses Kippmoment hat zur Folge, daß die Längsachse des inneren geführten Armgliedes 28 leicht nach unten geneigt gegen die Längsachse des führenden äußeren Armgliedes 28 verkantet ist. Dadurch wird das innere Ende des geführten inneren Armgliedes 28 in dem führenden äußeren Armglied 28 nach oben bewegt und in die obere Klemmaufnahme 32 des inneren Klemmteiles 30 gedrückt, wie in Figur 2 zu sehen ist. Im Bereich des äußeren Klemmteiles 30 wird dagegen das innere geführte Armglied 28 nach unten in die untere Klemmaufnahme 32 gedrückt, wie in Figur 3 zu sehen ist. Das innere Armglied 28 wird auf diese Weise mit einer leichten Neigung gegen das führende äußere Armglied 28 nach oben und unten fest in dem aus den Klemmteilen 30 bestehenden Klemmeinsatz gehalten. Die Vorsprünge 34 bewirken außerdem eine stabile seitliche Abstützung des inneren Armgliedes 28.

Die Armglieder 28 des Tragarmes 16 klemmen sich auf diese Weise in jeder beliebigen Auszugslage selbsttätig fest, so daß ein stabiler Tragarm 16 gebildet wird. Zur Lösung der Klemmwirkung muß nur jeweils das freie äußere Ende des Tragarmes 16 angehoben werden. Dadurch wird die leichte Kippung der Armglieder 28 gegeneinander aufgehoben und die oben beschriebene Klemmung gelöst. Die Armglieder 28 können dann wieder leichtgängig gegeneinander verschoben werden.

Die Klemmteile 30 sind alle in der Form identische Kunststoffplatten, so daß die Herstellung des Klemmeinsatzes äußerst kostengünstig ist.

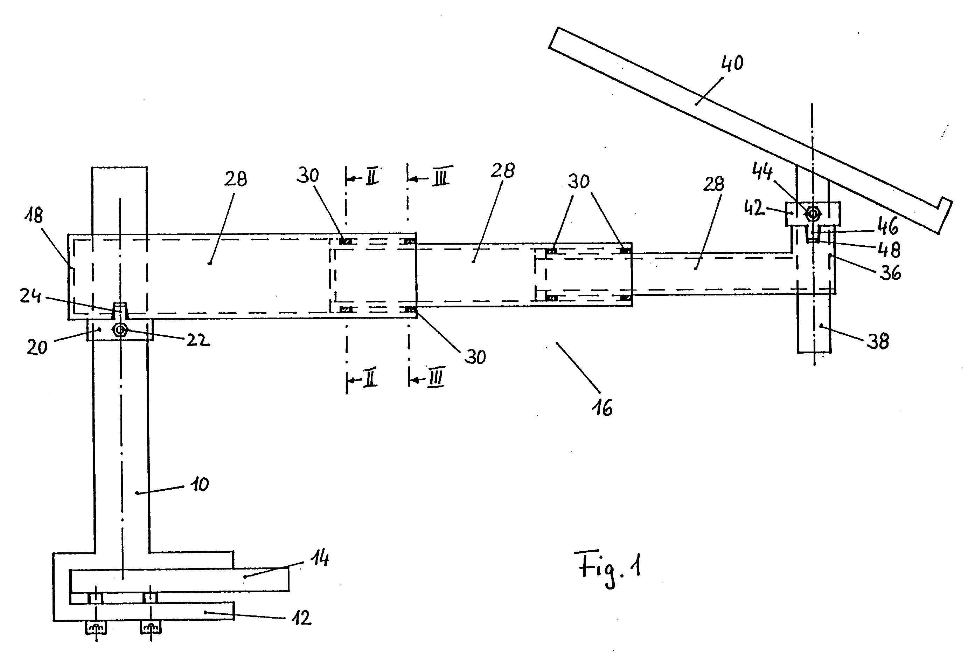

In dem in Figur 1 dargestellten Ausführungsbeispiel dient der Tragarm 16 zur Halterung einer Pultplatte 40. Die Pultplatte 40 ist am freien Ende des Tragarmes 16 um eine vertikale Achse drehbar gelagert. Hierzu ist die Pultplatte 40 an einem vertikalen Stützrohr 38 befestigt, das in einer vertikalen Hülse 36 am freien Ende des Tragarmes 16 aufgenommen ist. Oberhalb der Hülse 36 ist an dem Stützrohr 38 ein Stellring 42 angeordnet, der axial verschiebbar und verdrehbar ist und mittels einer Schraube 44 fixiert werden kann. Der Stellring 42 greift mit einer Nase 46 in eine Ausnehmung 48 der Hülse 36, um die Pultplatte in ihrem Drehwinkel festzustellen.

Der Tragarm 16 ist in der horizontalen Ebene schwenkbar an einer Tragsäule 10 gelagert. Hierzu weist der Tragarm ein hülsenförmiges Ende 18 auf, welches die Tragsäule 10 umschließt. An der Tragsäule 10 ist ein Stellring 20 in der Höhe und der Winkelstellung verstellbar und mittels einer Schraube 22 festklemmbar angeordnet. Der Stellring 20 greift mit einer nach oben gerichteten Nase 24 in eine Ausnehmung des hülsenförmigen Endes 18 des Tragarmes 16 ein, so daß der Tragarm in der Höhe und der Winkelstellung mittels des Stellringes festgelegt werden kann. Am unteren Ende der Tragsäule ist eine Klemmeinrichtung 12 angeordnet, mit welcher die Tragsäule 10 und damit der Tragarm 16 mit der Pultplatte 40 an der Tischplatte 14 eines Schreibtisches oder Arbeitstisches befestigt werden kann.

## Patentansprüche

1. Im wesentlichen horizontaler Tragarm (16) mit zur Längenveränderung ineinander schiebbaren Teleskopgliedern, die durch das Eigengewicht des Tragarmes (16) aus ihrer axialen Fluchtung gegeneinander verkippbar sind und sich dadurch relativ zueinander selbsthemmend fixieren, dadurch gekennzeichnet, daß die Teleskopglieder wenigstens zwei den Tragarm bildende Armglieder (28) sind, und daß die selbsthemmende Fixierung zwischen dem jeweils führenden äußeren Armglied (28) und dem geführten inneren Armglied (28) zwei in axialem Abstand in dem freien Ende des jeweils äußeren Armgliedes (28) angeordnete Klemmteile (30) aufweist, wobei das innere Armglied (28) durch sein Kippmoment mit seiner Unterseite gegen das dem freien Ende des äußeren Armgliedes (28) nähere Klemmteil (30) und mit seiner Oberseite gegen das von dem freien Ende des äußeren Armgliedes (28) entferntere andere Klemmteil (30) gedrückt wird und wobei zumindest eines der Klemmteile (30) eine sich keilförmig verjüngende Klemmaufnahme (32) aufweist, in die das innere Armglied (28) gedrückt wird.

2. Tragarm nach Anspruch 1, dadurch gekennzeichnet, daß das dem freien Ende des äußeren Armgliedes (28) nähere Klemmteil (30) an seiner unteren Seite eine sich nach unten keilförmig verjüngende Klemmaufnahme (32) und das andere Klemmteil (30) an seiner oberen Seite eine sich nach oben keilförmig verjüngende Klemmaufnahme (32) aufweisen.

3. Tragarm nach Anspruch 2, dadurch gekennzeichnet, daß die beiden Klemmteile (30) identische Kunststoffteile mit jeweils einer oberen und einer unteren Klemmaufnahme (32) sind.

## Claims

1. A substantially horizontal supporting arm (16) having telescopic members which can be slid into one another to change its length and which can be tilted by the weight of the supporting arm (16) out of their axial alignment in relation to one another and thereby become self-lockingly fixed in relation to one another, characterized in that the telescopic members are at least two arm members (28) forming the supporting arm, and the self-locking fixation between guiding outer arm member (28) and the guided inner arm member (28) has two clamping members (30) disposed at an axial distance in the free end of the outer arm member (28), the inner arm member (28) being forced by its tilting force via its underside against the clamping member (30) closer to the free end of the outer arm member (28) and via its top side against the other clamping member (30) more remote from the free end of the outer arm member (28), at least one of the clamping members (30) having a clamping holder (32) which tapers in wedge shape and into which the inner arm member (20) is forced.

2. A supporting arm according to claim 1, characterized in that the underside of the clamping member (30) closest to the free end of the outer arm member (28) has a clamping receiver (32) tapering downwards in wedge shape, while the top side of the other clamping member (30) has a clamping receiver (32) tapering upwards in wedge shape.

3. A supporting arm according to claim 2, characterized in that the two clamping parts (30) are identical plastics parts which each have a top and bottom clamping receiver (32).

## Revendications

1. Bras de support (16) sensiblement horizontal avec des sections télescopiques pouvant coulisser les uns dans les autres pour le réglage en longueur, sections qui peuvent basculer sous le poids propre du bras de support (14) à partir de leur alignement axial et s'immobiliser de façon auto-indésirable les uns par rapport aux autres, bras de support, caractérisé en ce que les sections télescopiques sont constituées par au moins deux sections de bras (28) composant le bras de support, et en ce que l'immobilisation auto-indésirable entre la section de bras (28) extérieure servant respectivement de guide et le second bras intérieur guidé (28) présente deux pièces de blocage (30) disposées avec un intervalle dans le sens axial dans l'extrémité libre de la section de bras extérieure correspondante (28), la section intérieure de bras (28) étant comprimée par son moment de renversement par son côté inférieur contre la pièce de blocage (30) plus proche de l'extrémité libre de la section de bras extérieur (28) et par son côté supérieur contre l'autre pièce de blocage (30) éloignée de l'extrémité libre de la section de bras extérieure (28) et l'une au moins des pièces de blocage (30) présentant une réception de blocage (32) allant en se rétrécissant en forme de coin, dans laquelle est comprimée la section de bras intérieure (28).

2. Bras de support selon la revendication 1, caractérisé en ce que la pièce de blocage (30) la plus proche de l'extrémité libre de la section de bras extérieure (28) présente sur son côté inférieur, une réception de blocage (32) allant en se rétrécissant vers le bas en forme de coin et l'autre pièce de blocage (30) présente sur son côté supérieur une réception de blocage (32) allant en se rétrécissant vers le haut en forme de coin.

3. Bras de support selon la revendication 2, caractérisé en ce que les deux pièces de blocage (30) sont des pièces en matière plastique identiques avec respectivement une réception de blocage supérieure et une réception de blocage inférieure (32).
